# EUROPÄISCHE PATENTANMELDUNG

(11) **EP 2 543 247 A1**
(43) Veröffentlichungstag der Anmeldung: **09.01.2013**
(21) Anmeldenummer: 12005043.0
(22) Anmeldetag: 06.07.2012
(51) Int. Cl.: A01K 1/015

(54) **Bettmaterial für einen Stallboden**

(30) Priorität: 08.07.2011 DE 102011107496
(71) Anmelder: J. Rettenmaier & Söhne GmbH + Co., 73494 Rosenberg (DE)
(72) Erfinder: Rettenmaier, Josef Otto, 73494 Rosenberg (DE)
(74) Vertreter: Weitzel, Wolfgang

(57) **Zusammenfassung**

Die Erfindung betrifft ein Bettmaterial für einen Stallboden für Nutztiere. Das Bettmaterial umfasst Lignocellulose, Calciumcarbonat und wahlweise ein Additiv, welche für alle Haltungssysteme Im Nutztierbereich geeignet ist. Das erfindungsgemäße Bettmaterial sorgt für eine extrem schnelle und effiziente Trocknung. Zudem verhindert es den Eintrag von pathogenen Keimen und steigert dadurch die Tiergesundheit im Stall und deren biologische Leistungsfähigkeit. Durch Zugabe von Additiven kann günstigenfalls der Produktionsprozess maßgeblich verbessert und somit die Wirtschaftlichkeit erhöht werden.

## Beschreibung

Die Erfindung betrifft Bettmaterial für einen Stallboden, vor allem für Aufzucht-oder Mastbetriebe von landwirtschaftlichen Nutztieren, auch für die reguläre Tierhaltung. Bei den Tieren handelt es sich beispielsweise um Geflügel aller Art, Einhufer oder Paarhufer.

Bekanntlich sind Ställe für Nutztiere der genannten Art mit dem genannten Bettmaterial ausgelegt. Dabei können Einzelställe verwendet werden, das heißt jeweils eine Stallung pro Tier, wie beispielsweise bei Kühen oder Pferden. Auch können größere Räume zur Haltung größerer Tierzahlen vorgesehen werden, beispielsweise von Schweinen oder Hühnern oder Puten.

Ganz allgemein geht es hierbei um das Aufnehmen von Nutztieren für längere Zeitspannen, zum Beispiel während der Aufzucht- oder Mastphase. Auf Dauer führt der Einsatz der schon bekannten Einstreumaterialien zur Reduktion des Leistungsvermögens, z. B. geringer Gewichtszunahme.

Besonders kritisch zu bewerten sind allergische Reaktionen der Haut, der Klauen, Verdauungsstörungen, Fruchtbarkeitsstörungen oder Aborte. Auch Atemwegserkrankungen treten auf.

Der Erfindung liegt die Aufgabe zugrunde, Maßnahmen zu treffen, durch welche die genannten Tiere, die während längerer Zeit innerhalb eines Tages in Ställen zubringen, von Krankheiten bewahrt bleiben und eine Verbesserung des Stall- und Liegekomforts erfahren.

Diese Aufgabe wird durch die Merkmale von Anspruch 1 gelöst.

Die Erfinder haben erkannt, dass zahlreiche der genannten Erkrankungen, vor allem allergische Reaktionen, Atemwegserkrankungen, Fruchtbarkeitsstörungen, Verdauungsstörungen, auf die Art des Bettmateriales zurückzuführen sind. Das bekannte Bettmaterial kann Rückstände von Pflanzenschutzmitteln aufweisen. Auch kann es kontaminiert sein durch Mykotoxinen, Endotoxinen, Milben oder Pollen. Auch Staubbelastung durch Bettmaterial hat sich als nachteilig erwiesen, ferner Schadgase, und vor allem ein erhöhter Ammoniakgehalt.

Das erfindungsgemäße Bettmaterial wirkt sich sehr positiv aus. Es hat ein hohes Feuchtigkeitsbindevermögen, sodass Schimmelbildung und die Entwicklung von Krankheitskeimen behindert oder verhindert werden. Ferner wird die Rutschfestigkeit der Tiere auf dem Bettmaterial erhöht und die Verletzungsgefahr des Bewegungsapparates verringert. Insgesamt führt der Einsatz von erflndungsgemäßem Bettmaterial zur Steigerung der Leistung, zum Beispiel des Gewichtes.

Als Einstreu für Katzentoiletten ist es zwar bekannt, Calciumcarbonat zu verwenden. Siehe US 2004/0112297 A1 und US 7089882 B1. Die Einstreu in Katzentoiletten dient jedoch einem ganz anderen Zweck. Hierdurch wird nämlich verhindert, dass sich Partikel der Einstreu an das Fell anhängen und von der Katze nach erledigtem Geschäft aus der Katzentoilette herausgeschleppt werden. Die Benutzung einer Kalzentoilette ist bekanntlich ein Vorgang von wenigen Sekunden, nicht aber von vielen Stunden wie bei einem Bettmaterial für einen Stallboden.

Das erfindungsgemäße Bettmaterial basiert auf einer Kombination aus Lignocellulose, Calciumcarbonat und gegebenenfalls weiteren Additiven. Besonders bevorzugt liegt dieses Kombinationsprodukt in granulierter Darreichungsform vor. Unter Granulierung verstehen wir alle üblichen Granuliertechnologien nach dem heutigen Stand der Technik, insbesondere - aber nicht ausschließlich - Pelletierung, Walzenkompaktierung, Aufbauagglomeration. Als Lignocellulose können alle bekannten und typischerweise in großen Mengen verfügbaren pflanzlichen Rohstoffe (Holz, Getreideprodukte, Heu, Stroh usw.) verwendet werden, welche Cellulose und Lignin enthalten.

Als Calciumcarbonat können Marmor, Kalkstein, Kreide und andere calciumcarbonathaltige Stoffe verwendet werden. Besonders vorteilhaft ist (vermutlich aufgrund ihrer porösen Mikrostruktur) die Verwendung von Kreide. Diese entspricht den Vorgaben der Verordnung (EU) Nr. 574/2011.

Als Additive können z.B. Bindemittel, Fließhilfsstoffe, Gerinnungshilfsstoffe, Emulgatoren, Stabilisatoren, Verdickungs- und Geliermittel verwendet werden. Besonders vorteilhaft ist die Verwendung von einem Additiv, welches den Verarbeitungsprozess verbessert oder die Funktionalität des Produkts weiter steigert.

Die Verwendung von reinem Kalk hat den Nachteil der Staubbildung. Außerdem bildet reiner Kalk keine weiche Matte, da es zu keiner Volumenvergrößerung, bei Feuchtigkeitsaufnahme, führt. Man würde also eine zusätzliche Einstreu benötigen, um den Tieren eine angenehme Nutzfläche/Liegefläche zu bieten. Zudem würde reiner Kalk zu einer rutschigen, schmierigen Oberfläche führen. Dadurch könnten sich die Tiere verletzen. Weiterhin führt reiner Kalk zu einer unerwünschten Austrocknung der mit ihm in Berührung kommenden Körperteile der Tiere.

Das Kombinationsprodukt hat eine geringe Staubbildung und bildet eine rutschfeste, geschlossene und weiche Einstreumatte.

Die Verwendung von einem Additiv ist nicht für jede Tierart in unbegrenzter Menge erlaubt. In Kombination mit den anderen Komponenten können die eingesetzten Additive die Produktivität der Granulierung steigern. Idealerweise verstärkt das verwendete Additiv die antibakterielle Wirkung und verbessert so die Produktfunktionalität.

Es hat sich als vorteilhaft erwiesen, wenn der Anteil der Lignocellulose im Kombinationsprodukt größer ist als der Calciumcarbonatanteil. Besonders gute Ergebnisse werden bei einem Verhältnis von 90 % Lignocellulose und 10 % Calciumcarbonat erzielt.

Überraschenderweise führt der Einsatz des erfindungsgemäßen Bettmateriales zu folgenden positiven Aspekten: Das neue Produkt bildet eine einheitliche und weiche Einstreumatte aus. Zudem trocknet es schneller als bisher verwendete Produkte. Dies führt zu einer Verbesserung der Fußballeneigenschaften und dadurch zu einer schnelleren Gewichtszunahme bei Masttieren. Das erfinderische Produkt vermindert zudem Hautirritationen an empfindlichen Körperpartien.

Auch die Sauberkeit und Hygiene wird durch den Einsatz von Calciumcarbonat und den zugesetzten Additiven in Ställen verbessert. Durch den Zusatz von Calciumcarbonat wird der pH-Wert erhöht und somit die Anzahl der coliformen Keime reduziert. Daraus folgen eine langanhaltende Hygienewirkung und ein reduzierter Keimdruck, Die feine Vermahlung des Calciumcarbonates sorgt für eine aktive Oberfläche und führt zu einer nachhaltigen Bindung von Feuchtigkeit.

Ein enormer Vorteil ist der wirtschaftliche Aspekt, Calciumcarbonat ist nicht nur ein kostengünstiger und ausreichend verfügbarer Rohstoff, sodass der Preis gegenüber anderer Tiereinstreu, die auf reiner Lignocellulose basieren, reduziert werden kann. Vielmehr führt das erfindungsgemäße Produkt zu großen Kosteneinsparungen beim Anwender, indem es den Arbeitsaufwand während der Mast minimiert.

Zudem wird durch das Ausbilden einer gleichmäßigen Einstreumatte eine geringere Menge Bettmaterial pro Fläche benötigt. Typischerweise werden vom erfindungsgemäßen Bettmaterial in der Putenmast ca. 12,5 kg je m² eingestreut, was einer Schicht von 3 cm Bettmaterial entspricht. In der Broilermast werden von dem erfindungsgemäßen Bettmaterial ca. 0,5 - 1 kg je m², abhängig von Management und Länge der Mast, eingestreut. In Abhängigkeit vom Haltungssystem (Boden- oder Volierenhaltung) werden in der Legehennenhaltung ca. 0,5 - 5 kg je m², abhängig vorn Haltungssystem, eingestreut.

Gleichzeitig wird dadurch das Mistvolumen reduziert, welches sich vorteilhafterweise anschließend für die Nutzung in einer Biogasanlage eignet.

Vorteilhafterweise besitzt die Einstreu eine maximale Trocknungsleistung durch Verwendung einer möglichst stark fibrillierten Lignocellulose. Die Reversibilität der fibrillierten Lignocellulose führt zu einer zügigen Feuchtigkeitsaufnahme und beständiger Verdunstungskapazität. Das schnellere Trocknen des Produkts führt ebenfalls zu einer Zeitersparnis hinsichtlich des Nachstreuens.

Vorteilhafterweise wird dadurch die Entwicklung von Krankheitskelmen stark reduziert und das Leistungsvermögen der Tiere gesteigert. Das erfinderische Bettmaterial weist dadurch eine hohe Rutschfestigkeit auf und verhindert eine Verletzung des Bewegungsapparates.

## Patentansprüche

1. Bettmaterial für einen Stallboden für Aufzucht- oder Mastbetriebe, enthaltend eine Kombination aus Llgnocellulose und Calciumcarbonat.

2. Bettmaterial für einen Stallboden nach Anspruch 1, **dadurch gekennzeichnet, dass** Lignocellulose im Überschuss vorliegt

3. Bettmaterial für einen Stallboden nach Anspruch 1 oder 2, **dadurch gekennzeichnet, dass** das Verhältnis von Lignocellulose und Calciumcarbonat zwischen 7:1 und 11:1, vorzugsweise bei 9:1 liegt.

4. Bettmaterial für einen Stallboden nach Anspruch 1 bis 3, **dadurch gekennzeichnet, dass** das Bettmaterial granuliert ist.

5. Bettmaterial für einen Stallboden nach Anspruch 1 bis 4, **dadurch gekennzeichnet, dass** das Bettmaterial aus aufgebrochenen Granulaten besteht.

6. Bettmaterial für einen Stallboden nach Anspruch 1 bis 5, **dadurch gekennzeichnet, dass** die maximale Länge des Hauptanteils der Granulate zwischen 2 und 15 mm, bevorzugt zwischen 3 und10, besonders bevorzugt zwischen 4 und 6 mm liegt.

7. Bettmaterial für einen Stallboden nach Anspruch 1 bis 6, **dadurch gekennzeichnet, dass** 80 % - 90% der Korngröße des Kreidekalks < 0,9 mm, bevorzugt < 0,4 mm, besonders bevorzugt < 100 µm ist.

8. Bettmaterial für einen Stallboden nach Anspruch 1 bis 7, **dadurch gekennzeichnet, dass** die Lignocellulose Holzfasern oder -partikel enthält.

9. Bettmaterial für einen Stallboden nach Anspruch 1 bis 8, **dadurch gekennzeichnet, dass** das Bettmaterial eine maximale Quellung durch
Zugabe von Wasser oder einer anderen Flüssigkeit innerhalb von einer bis drei Minuten erreicht ist.

10. Bettmaterial für einen Stallboden nach einem der Ansprüche 1 bis 9, **dadurch gekennzeichnet, dass** es weitere Additive als Prozesshilfsmittel oder zur Verbesserung der Funktionalität der Einstreu enthält.
